# FASCICULE DE BREVET EUROPEEN

(11) **EP 1 235 459 B1**
(45) Date de publication et mention de la délivrance du brevet: **16.04.2008**
(21) Numéro de dépôt: 02290248.0
(22) Date de dépôt: 04.02.2002
(51) Int. Cl.: H04Q 7/38, G06F 9/46

(54) **Procédé de gestion de ressources de traitement dans un système de radiocommunications mobiles**
Verfahren zum Bereitstellung einer Verarbeitungsbetriebsmittelverwaltung in einem mobilen Funkkommunikationssystem
Method for processing resource management in a mobile radiocommunication system

(30) Priorité: 23.02.2001 FR 0102527
(43) Date de publication de la demande: 28.08.2002
(73) Titulaire: Evolium S.A.S., 75008 Paris (FR)
(72) Inventeur: Agin, Pascal, 94370 Sucy en Brie (FR)
(74) Mandataire: El Manouni, Josiane

(56) Documents cités:
- WO-A-00/33589
- WO-A-00/54536
- GB-A- 2 347 317
- EUROPEAN TELECOMMUNICATIONS STANDARDS INSTITUTE: "Technical Specification;Universal Mobile Telecommunications System (UMTS); UTRAN lub Interface NBAP Signalling (3G TS 25.433 version 3.2.0 Release 1999)" ETSI TS 125 433 V3.2.0, XX, XX, juin 2000 (2000-06), XP002166441

## Description

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

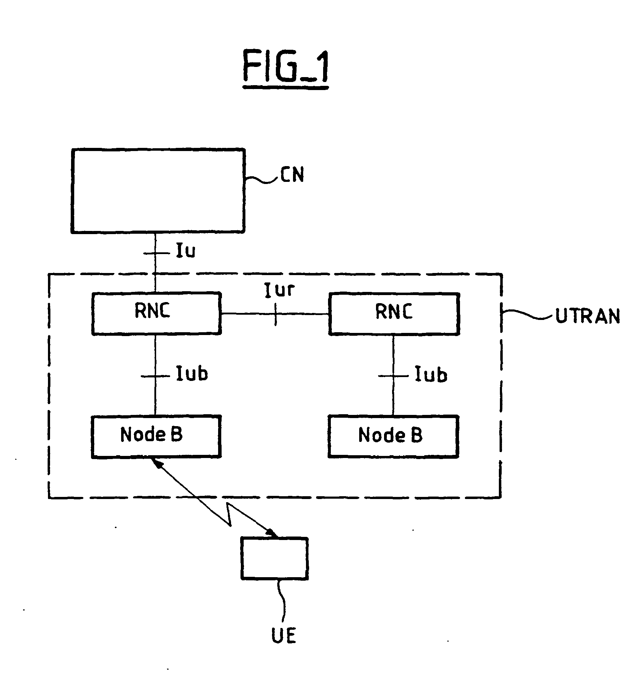

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « tu ».

Comme rappelé sur la figure 1, les RNC sont reliés :
- aux Node B par une interface appelée interface « lub »,
- entre eux par une interface appelée interface « lur »,
- au coeur de réseau CN par une interface appelée interface « lu **»,**

Pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

il serait donc souhaitable de tenir compte de la capacité de traitement des stations de base (ou Node B) pour le contrôle de la charge dans un tel système.

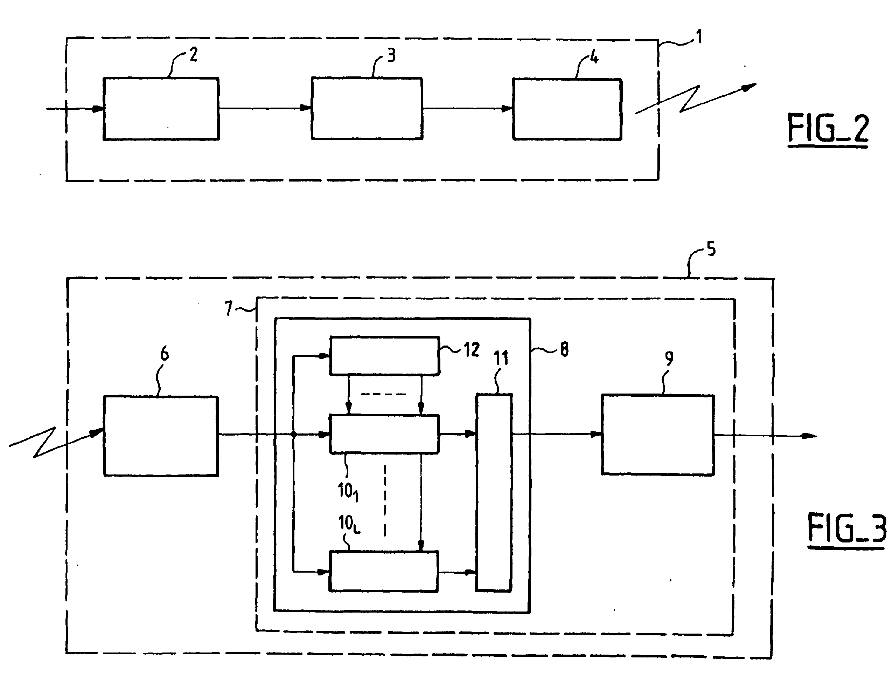

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:
- des moyens de codage-canal 2,
- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que noatmment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:
- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés 10₁ à 10_{L}, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3^{rd} Génération Partnership Project") que le Node B signale au CRNC sa capacité de traitement globale (appelée "capacity crédit"), et la quantité de cette capacité de traitement globale, ou coût, pour chaque valeur du facteur d'étalement (ou « spreading factor » en anglais, ou SF) possible dans ce système. L'ensemble des coûts pour les différentes valeurs possibles du facteur d'étalement est aussi appelé loi de consommation de capacité (ou « capacity consumption law» en anglais). De telles informations sont signalées par un Node B au CRNC à chaque fois que la capacité de traitement de ce Node B est changée, en utilisant un message appelé « Resource Status Indication», ou en réponse à une requête du CRNC en utilisant un message appelé « Audit Response».

Le CRNC met alors à jour le crédit restant, sur la base de la loi de consommation, notamment, dans le système UMTS:
- pour les canaux dédiés, lors des procédures d'établissement, addition, effacement, ou reconfiguration, d'un lien radio (ou en anglais, « radio link set-up », « radio link addition », « radio link deletion », « radio link reconfiguration») telles que définies dans le document 3G TS 25.433 publié par le 3GPP,
- pour les canaux communs, lors des procédures d'établissement, effacement, ou reconfiguration, d'un canal commun (ou en anglais, «common transport channel set-up", «common transport channel deletion », « common transport channel reconfiguration ») telles que définies dans le document 3G TS 25.433. publié par le 3GPP.

De telles procédures sont aussi appelées procédures NBAP (pour « Node B Application Part » en anglais), et les messages de signalisation correspondants sont aussi appelés messages NBAP.

Dans la norme 3G TS 25.433, deux lois de consommation distinctes ont été définies, une pour les canaux dédiés, et une pour les canaux communs. On rappelle qu'un canal dédié est un canal alloué à un utilisateur donné, alors qu'un canal commun est un canal partagé entre plusieurs utilisateurs. Par exemple, dans le système UMTS, le canal DCH (pour « Dedicated CHannel » en anglais) est un canal dédié, et les canaux tels que notamment RACH (pour « Random Access CHannel » en anglais), FACH (pour « Forward Access CHannel » en anglais), CPCH (pour « Common Packet CHannel » en anglais), DSCH (pour Downlink Shored CHannel» en anglais), ...etc, sont des canaux communs.

Ainsi que l'a observé le demandeur, le mécanisme de crédit tel que décrit dans la norme 3G TS 25.433 dans son état actuel pose encore certains problèmes.

Un problème est que la norme actuelle n'indique pas comment le cas de transmission multicode doit être pris en compte dans ce mécanisme de crédit.

Or, comme rappelé précédemment, dans le système UMTS, la transmission multicode peut être utilisée dans le sens montant ou descendant, et la quantité de ressources de traitement nécessaires n'est pas la même suivant le nombre de codes d'étalement utilisés. Il serait donc souhaitable d'en tenir compte dans le mécanisme de crédit considére.

Le but de la présente invention est d'apporter une solution à ce problème.

Un objet de la présente invention est ainsi un procédé de gestion de ressources de traitement dans un système de radiocommunication mobiles, dans lequel un contrôleur de stations de base gère des ressources radio et des ressources de traitement correspondantes, ces dernières étant prévues dans une station de base, procédé dans lequel:
- le contrôleur de stations de base signale à la station de base sa capacité de traitement globale, ou crédit de capacité, et la loi de consommation, ou quantité de cette capacité de traitement globale, ou coût, pour différentes valeurs de facteur d'étalement,
- le contrôleur de stations de base met à jour le crédit de capacité sur la base dé la loi de consommation,
procédé caractérisé en ce que :
- dans le cas de transmission multicode, utilisant N codes d'étalement, ladite mise à jour est effectuée sur la base du coût pour au moins un des N codes d'étalement.

Suivant une autre caractéristique, le coût pour les N codes correspond à la somme des coûts pour chacun des N codes.

Suivant une outre caractéristique, le coût pour N codes est déterminé à partir du coût pour un code.

Suivant une outre caractéristique, le coût pour N codes correspond à N fois le coût pour un code,

Suivant une autre caractéristique, le coût pour N codes correspond au coût pour le code de facteur d'étalement Minimum.

Suivant une outre caractéristique, les coûts donnés dans la loi de consommation sont des coûts par code d'étalement.

Suivant une outre caractéristique, pour tes canaux dédiés, lorsque des codes d'étalement multiples sont utitisès soit par les liens radio soit par le canal Physical Downlink Shared Channel PDSCH, le coût crédité ou débité du crédit de capacité est pris comme N fois le coût d'un codé, où N est le nombre de codes.

Suivant une outre caractéristique, pour les canaux communs, lorsque des: codes d'étalement multiples sont utilisés par un canal physique; le coût crédité ou débité du crédit de capacité est pris comme N fois le coût d'un code, où N est le nombre de codes.

Un autre objet de la présente invention est un système de radiocommunications mobiles, pour la mise en oeuvre d'un tel procédé, système dans lequel:
- une station de base comporte des moyens pour signaler à un contrôleur de stations de base sa capacité de traitement globale, ou crédit de capacité, et la loi de consommation, ou quantité de cette capacité de traitement globale, ou coût, pour différentes valeurs de facteur d'étalement,
- le contrôleur de stations de base comporte des moyens pour mettre à jour le crédit de capacité sur la base de la loi de consommation, système caractérisé en ce que:
- le contrôleur de stations de base comporte des moyens pour, dans le cas de transmission multicode, utilisant N codes d'étalement, effectuer ladite mise a jour sur la base du coût pour au moins un des N codes d'étalement.

Suivant une autre caractéristique, les coûts donnés dans la loi de consommation sont des coûts par code d'étalement.

Suivant une autre caractéristique, pour les canaux dédiés, lorsque des codes d'étalement multiples, sont utilisés soit par les liens radio soit par le canal Physical Downlink Shared Channel PDSCH, le coût crédité ou débité du crédit de capacité est pris comme N fois le coût d'un code, ou N est le nombre de codes.

Suivant une autre caractéristique, pour les canaux communs lorsque des codes d'étalement multiples' sont utilisés par un canal physique, le coût crédité ou débité du crédit de capacité est pris comme N fois le coût d'un code, où N est le nombre de codes.

Un autre objet de la présente invention est un contrôleur de stations de base pour système de radiocommunications mobiles, comportant des moyens pour recevoir d'une station de base sa capacité de traitement globale, ou crédit de capacité, et la loi de consommation, ou quantité de cette capacité de traitement globale, où coût, pour différentes valeurs de facteur d'étalement, et des moyens pour mettre à jour le crédit de capacité sur la base de la loi de consommation, caractérisé en ce qu'il comporte:
- des moyens pour, dans le cas de transmission multicode, utilisant N codes d'étalement, effectuer ladite mise à jour sur la base du coût pour au moins un des N codes d'étalement.

Suivant une outre caractéristique, les coûts donnés dans la loi de consommation sont des coûts par code d'étalement.

Suivant une autre caractéristique, pour les canaux dédiés, lorsque des codes d'étalement multiples sont utilisés soit par les liens radio soit par le canal Physical. Downlink Shared Channel PDSCH, le coût crédité au débité du crédit de capacité est pris comme N fois le coût d'un code, où N est le nombre de codes.

Suivant une autre caractéristique, pour les canaux communs, lorsque des codes d'étalement multiples sont utilisés par un canal physique, le coût crédité ou débité du crédit de capacité est pris comme N fois le coût d'un code, où N est le nombre de codes.

D'autres objets et caractéristiques de la présente invention apparaîtront à la lecture de la description suivante d'exemples de réalisation, faite en relation avec les dessins ci-annexés dans lesquels:
- la figure 1, décrite précédemment, rappelle l'architecture générale d'un système de radiocommunications mobiles, tel que notamment le système UMTS,
- les figurés 2 et 3, décrites précédemment, rappellent les principaux traitements utilisés, respectivement en émission et en réception, dans une station de base, telle qu'un Node B pour le système UMTS,
- la figure 4 est un schéma destiné à illustrer un exemple de mise en oeuvre d'un procédé suivant l'invention.

La présente invention a donc notamment pour but de résoudre différents problèmes posés par le mécanisme de crédit tel que décrit dans là norme 3G TS 25.433 dans son état actuel.

Un problème est que le cas de transmission multicode n'est actuellement pas traité dans la norme.

La solution suivant l'invention, pour résoudre ce problème, peut aussi être expliquée de la façon suivante.

On rappelle que le cas de transmission multicode correspond au cas d'utilisation de plusieurs codes d'étalement (ou «spreading codes », ou encore «channelization codes » en anglais) pour le même CCTrCh (« Coded Composite; Transport Channel »).

La solution la plus simple est de considérer que le coût pour N codes est simplement la somme des coûts des codes individuels (N fois le coût d'un code si les codes d'étalement ont le même facteur d'étalement), ou plus généralement de dériver le coût pour N codes en fonction du coût pour un code. Ceci éviterait une signalisation additionnelle et permettrait de prendre en compte de façon plus simple le cas de codes multiples.

Il serait aussi possible de considérer que le coût de N codes correspond au coût du code ayant le plus faible facteur d'étalement (parmi ces N codes) bien que cela semble moins logique car le traitement de N codes peut être très différent du traitement d'un code.

Une autre possibilité est de signaler les différents coûts pour différents nombres N de codes (un par nombre de codes et par facteur d'étalement). Ceci nécessiterait cependant une signalisation plus importante. Cependant, dans le sens montant, ceci pourrait être possible car des codes multiples sont seulement autorisés pour le facteur d'étalement minimum. Ainsi, une signalisation limitée serait nécessaire.

De manière générale pour résoudre ce problème l'invention prévoit donc essentiellement que, dans le cas de transmission multicode, utilisant N c.odes d'étalement, ladite mise à jour est effectuée sur là base du coût pour au moins un des N codes d'étalement.
Suivant un mode de réalisation avantageux, pour les canaux dédiés, les coûts donnés dans la loi de consommation sont des coûts par code d'étalement (ou «spreading code» ou «channelization code» en anglais). Lorsque dès codes d'étalement multiples sont utilisés soit par les liens radio (cas des canaux dédiés) soit par le canal PDSCH, le coût crédité ou débité du crédit de capacité est pris comme N fois le coût d'un code, où N est le nombre de codes. De même, suivant un mode de réalisation avantageux, pour les canaux communs, les coûts donnés dans la ici de consommation sont des coûts par code d'étalement (ou «spreading code » ou «channelization code» en anglais). Lorsque des codes d'étalement multiples sont utilisés par un canal physique, le coût crédité ou débité du crédit de capacité est pris comme N fois le coût d'un code, où N est le nombre de codes,

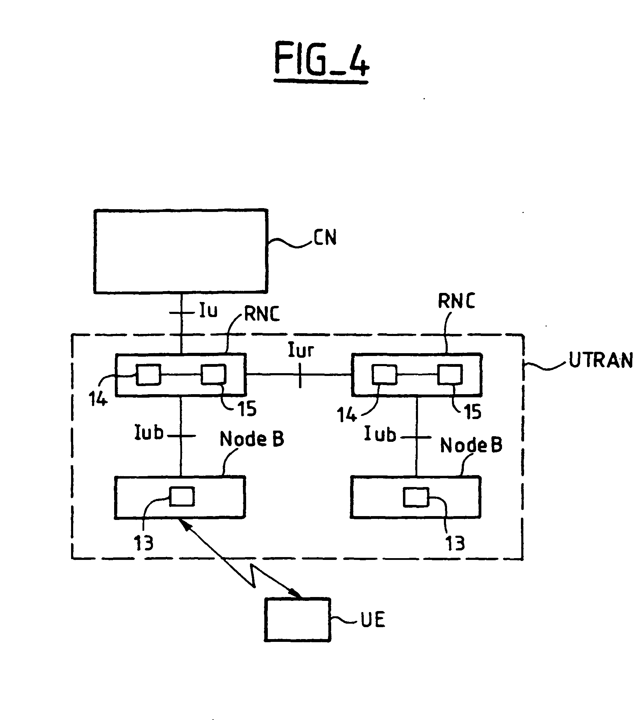

La figure 4 peut également être utilisée pour illustrer un exemple de moyens à prévoir dans une station de base (ou Node B dans un système tel que le système UMTS), et dans un contrôleur de stations de base (ou RNC pour un système tel que le système UMTS), pour mettre en oeuvre un tel procédé suivant l'invention.

Une station de base notée Node B comporte ainsi (en plus d'autres moyens qui peuvent être des moyens classiques):
- des moyens notés 13 pour signaler à un contrôleur de stations de base sa capacité de traitement globale, ou crédit de capacité, et la quantité de cette capacité de traitement globale, ou coût, pour différentes valeurs de facteur d'étalement:

Un contrôleur de stations de base noté CRNC (pour « Controlling Radio Network Controller ») comporte ainsi (en plus d'autres moyens qui peuvent être des moyens classiques):
- des moyens notés 14 pour recevoir d'une station de base sa capacité de traitement globale, ou crédit de capacité, et la quantité de cette capacité de traitement globale, ou coût, pour différentes valeurs de facteur d'étalement,
- des moyens également notés 15 pour mettre à jour le crédit de capacité sur la base de la loi de consommation, ladite mise à jour étant effectuée, dans le cas de transmission multicode, utilisant N codés d'étalement, sur la base du coût pour au moins un des N codes d'étalement.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

On notera que le terme de « mise à jour » du crédit de capacité utilisé dans tout ce qui précède est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Notamment :
- pour les procédures de «radio link set-ups», radio link addition », et « common transport channel set-up», crédit de capacité est débité,
- pour les procédures de «radio link deletion », et de «common transport channel deletion», le crédit de capacité est crédité,
- pour le cas de «radio link reconfiguration» et de «common transport channel reconfiguration» le crédit de capacité est débité ou crédité selon que la différence entre le coût d'allocation pour le nouveau débit et pour l'ancien débit est négative ou positive.

Dans la description ci-dessus, le coût peut être fonction du facteur d'étalement, comme spécifié dans la norme rappelée précédemment (dans son état actuel). Cependant le principe ainsi décrit n'est pas limité à ce cas, et s'applique également au cas où le coût serait fonction d'un ou plusieurs autres paramètres, tels que notamment le débit.

## Revendications

1. Procédé de gestion de ressources de traitement dans un système de radiocommunications mobiles, dans lequel un contrôleur de stations de base gère des ressources radio et des ressources de traitement correspondantes, ces dernières étant prévues dans une station de base, procédé dans lequel:
- la station de base signale au contrôleur de stations de base sa capacité de traitement globale, ou crédit de capacité, et la loi de consommation, ou quantité de cette capacité de traitement globale, ou coût, pour différentes valeurs de facteur d'étalement,
- le contrôleur de stations de base met à jour le crédit de capacité sur la base de la loi de consommation,
procédé **caractérisé en ce que**:
- dans le cas de transmission multicode, utilisant N codes d'étalement, ladite mise à jour est effectuée sur la base du coût pour au moins un des N codes d'étalement.

2. Procédé selon la revendication 1, dans lequel le coût pour les N codes correspond à la somme des coûts pour chacun des N codes.

3. Procédé selon la revendication 1, dans lequel le coût pour les N codes est déterminé à partir du coût pour un code.

4. Procédé selon la revendication 3, dans lequel le coût pour les N codes correspond au coût pour le code de facteur d'étalement minimum,

5. Procédé selon l'une des revendications 1 à 4, dans lequel les coûts donnés dans la loi de consommation sont des coûts par code d'étalement.

6. Procédé selon l'une des revendications 1 à 5, dans lequel, pour les canaux dédiés, lorsque des codes d'étalement multiples sont utilisés soit par les liens radio soit par le canal Physical Downlink Shared Channel PDSCH, le coût crédité ou débité du crédit de capacité est pris comme N fois le coût d'un code, où N est le nombre de codes.

7. Procédé selon l'une des revendications 1 à 5, dans lequel, pour les canaux communs, lorsque des codes d'étalement multiples sont utilisés par un canal physique, le coût crédité ou débité du crédit de capacité est pris comme N fois le coût d'un code, où N est le nombre de codes.

8. Système de radiocommunication mobiles, système dans lequel:
- une station de base comporte des moyens (13) pour signaler à un contrôleur de stations de base sa capacité de traitement globale, ou crédit de capacité, et la loi de consommation, ou quantité de cette capacité de traitement globale, ou coût, pour différentes valeurs de facteur d'étalement,
- le contrôleur de stations de base comporte des moyens (15) pour mettre à jour le crédit de capacité sur la base de la loi de consommation,
système **caractérisé en ce que**
- le contrôleur de stations de base comporte des moyens pour, dans le cas de transmission multicode, utilisant N codes d'étalement, effectuer ladite mise à jour sur la base du coût pour au moins un des N codes d'étalement.

9. Système selon la revendication 8, dans lequel les coûts donnés dans la loi de consommation sont des coûts par code d'étalement.

10. Système selon l'une des revendications 8 ou 9, dans lequel, pour les canaux dédiés, lorsque des codes d'étalement multiples sont utilisés soit par les liens radio soit par le canal Physical Downlink Shared Channel PDSCH, le coût crédité ou débité du crédit, de capacité est pris comme N fois le coût d'un code, où N est le nombre de codes.

11. Système selon l'une des revendications 8 ou 9, dans lequel, pour les canaux communs, lorsque des codes d'étalement multiples sont utilisés par un canal physique, la coût crédité ou débité du crédit de capacité est pris comme N fois le coût d'un code, où N est le nombre de codes.

12. Contrôleur de stations de base pour système de radiocommunications mobiles comportant des moyens (14) pour recevoir d'une station de base sa capacité dé traitement globale, ou crédit de capacité, et la loi de consommation, ou quantité de cette capacité de traitement globale, ou coût, pour différentes valeurs de facteur d'étalement, et des moyens (15) pour mettre à jour le crédit de capacité sur la base de la loi de consommation, **caractérisé en ce qu'**il comporte:
des moyens pour, dans le cas de transmission multicode, utilisant N codes d'etalement, effectuer ladite mise à jour sur la base du coût pour ou moins un des N codes d'étalement.

13. Contrôleur de stations de base selon la revendication 12, dans lequel les coûts donnés dans la loi de consommation sont des coûts par code d'étalement.

14. Contrôleur de stations de base selon l'une des revendications 12 ou 13, dans lequel, pour les canaux dédiés, lorsque des codes d'étalement multiples sont utilisés soit les liens radio soit par le canal Physical Downlink Shared Channel PD-SCH, le coût crédité ou débité du crédit de capacité est pris comme N fois le coût d'un code, où N est le nombre de codes.

15. Contrôleur de stations de bases selon l'une des revendication 12 ou 13, dans lequel, pour les canaux communs, lorsque des codes d'étalement multiples sont utilisés par un canal physique, le coût crédité ou débite du crédit de capacité est pris comme N fois le coût d'un code, où N est le nombre de codes.

## Claims

1. A method of managing processing resources in a mobile radio system, in which a base station controller manages radio resources and corresponding processing resources, the latter being provided in a base station, in which method:
- the base station signals to the base station controller its global processing capacity, or capacity credit, and the consumption law, or quantity of said global processing capacity, or cost, for different spreading factor values,
- the base station controller updates the capacity credit on the basis of the consumption law,
the method being **characterized in that**:
- in the case of multicode transmission using N spreading codes, said updating is effected on the basis of the cost for at least one of the N spreading codes.

2. A method according to claim 1, wherein the cost for the N codes corresponds to the sum of the costs for each of the N codes.

3. A method according to claim 1, wherein the cost for the N codes is determined from the cost for one code.

4. A method according to claim 3, wherein the cost for the N codes corresponds to the cost for the code with the minimum spreading factor.

5. A method according to any one of claims 1 to 4, wherein the costs given in the consumption law are costs per spreading code.

6. A method according to any one of claims 1 to 5, wherein, for the dedicated channels, if multiple spreading codes are used either by the radio links or by the Physical Downlink Shared Channel PDSCH, the cost credited to or debited from the capacity credit is taken as N times the cost for one code, where N is the number of codes.

7. A method according to any one of claims 1 to 5, wherein, for the common channels, if multiple spreading codes are used by a physical channel, the cost credited to or debited from the capacity credit is taken as N times the cost for one code, where N is the number of codes.

8. A mobile radio system, in which system:
- the base station includes means (13) for signaling to a base station controller its global processing capacity, or capacity credit, and the consumption law, or quantity of said global processing capacity, or cost, for different spreading factor values,
- the base station controller includes means (15) for updating the capacity credit on the basis of the consumption law,
the system being **characterized in that**:
- in the case of multicode transmission using N spreading codes, the base station controller includes means for effecting said updating on the basis of the cost for at least one of the N spreading codes.

9. A system according to claim 8, wherein the costs given in the consumption law are costs per spreading code.

10. A system according to claim 8 or claim 9. wherein, for the dedicated channel if multiple spreading codes are used either by the radio links or by the Physical Downlink Shared Channel PDSCH, the cost credited to or debited from the capacity credit is taken as N times the cost for one code, where N is the number of codes.

11. A system according to claim 8 or claim 9, wherein, for the common channels, if multiple spreading codes are used by a physical channel, the cost credited to or debited from the capacity credit is taken as N times the cost for one code, where N is the number of codes.

12. A base station controller for a mobile radio communications system including means (14) for receiving from a base station its global processing capacity, or capacity credit, and the consumption law, or quantity of said global processing capacity, or cost, for different spreading factor values, and means (15) for updating the capacity credit on the basis of the consumption law, the base station controller being **characterized in that** it includes:
- means for, in the case of multicode transmission using N spreading codes, effecting said updating on the basis of the cost for at least one of the N spreading codes.

13. A base station controller according to claim 12, wherein the costs given in the consumption law are costs per spreading code.

14. A base station controller according to claim 12 or claim 13, wherein, for the dedicated channels, if multiple spreading codes are used either by the radio links or by the Physical Downlink Shared Channel PDSCH, the cost credited to or debited from the capacity credit is taken as N times the cost for one code, where N is the number of codes.

15. A base station controller according to claim 12 or claim 13, wherein, for the common channels, if multiple spreading codes are used by a physical channel, the cost credited to or debited from the capacity credit is taken as N times the cost for one code, where N is the number of codes.

## Patentansprüche

1. Verfahren zur Verwaltung von Verarbeitungsressourcen in einem mobilen. Funkkommunikationssystem, bei dem ein Basisstations-controller die Funkressourcen und die entsprechenden Verarbeitungsressourcen verwaltet, wobei Letztere in einer Basisstation vorgesehen sind, wobei das Verfahren Folgendes umfasst:
Die Basisstation meldet dem Basisstations-Controller ihre Gesamt-Verarbeitungskapasität, oder Capacity Credit, und das Verbrauchsgesetz oder den Umfang dieser Gesamt-Verarbeitungskapazität, oder die Kosten, für verschiedene Werte des Spreizungsfaktors,
- Der Basisstations-Controller aktualisiert die. Verarbeitungskapazität auf der Basis des verbrauchsgesetzes,
wobei das Verfahren **dadurch gekennzeichnet ist, dass**
- die genannte Aktualisierung im Fall einer Mehrfachcode-Übertragung mit N Spreizungscodes auf der Basis der Kosten für mindestens einen der N Spreizungscodes durchgeführt wird.

2. Verfahren gemäß Anspruch 1, bei dem die Kosten für die N Codes der Summe der Kosten für jeden der N Codes entsprechen.

3. Verfahren gemäß Anspruch 1, bei dem die Kosten für die N Codes ausgehend von den Kosten für einen Code .ermittelt werden.

4. Verfahren gemäß Anspruch 3, bei dem die Kosten für die N Codes den Kosten für den Code des geringsten Spreizungsfaktors entsprechen,

5. Verfahren gemäß einem der Ansprüche 1 bis 4, bei dem es sich bei den im Verbrauchsgesetz gegebenen Kosten um die Kosten pro Spreizungscode handelt.

6. Verfahren gemäß einem der Ansprüche 1 bis 5, bei dem die gutgeschriebenen oder belasteten Kosten für die Verarbeitungskapazität für dedizierte Kanäle, wenn von den Funkverbindungen oder dem PDSCH-Kanal (Physical Downlink Shared Channel) mehrere Spreizungscodes verwendet werden, als das N-fache der Kosten eines Codes betrachtet werden, wobei N die Anzahl der Codes ist.

7. Verfahren gemäß einem der Ansprüche 1 bis 5, bei dem die gutgeschriebenen oder belasteten Kosten für die Verarbeitungskapazität für gemeinsame Kanäle, wenn von einem physischen Kanal mehrere Spreizungscodes verwendet werden, als das N-fache der Kosten eines Codes betrachtet werden, wobei N die Anzahl der Codes ist.

8. Mobiles Funkkommunikationssystem, in dem:
- eine Basisstation Mittel (13) umfasst, um einem Basisstations-Controller ihre Gesamt-Verarbeitungskapazität., oder Capacity Credit, und das Verbrauchsgesetz oder den Umfang dieser Gesamt-Verarbeitungskapazität, oder die Kosten, für verschiedene Werte des Spreizungsfaktors zu melden;
- der Basisstations-Controller Mittel (15) umfasst, um die Verarbeitungskapazität auf der Basis des Verbrauchsgesetzes zu aktualisieren;
wobei das System **dadurch gekennzeichnet ist, dass**
- der Basisstations-Controller Mittel umfasst, um die genannte Aktualisierung im Fall einer Mehrfachcode-Übertragung mit N Spreizungscodes auf der Basis der Kosten für mindestens einen der N Spreizungscodes durchzuführen.

9. System gemäß Anspruch 8, in dem es sich bei den im Verbrauchsgesetz gegebenen Kosten um die Kosten pro Spreizungscode handelt.

10. System gemäß einem der Ansprüche 8 oder 9, bei dem die gutgeschriebenen oder belasteten Kosten für die Übertragungskapazität für dedizierte Kanäle, wenn von den Funkverbindungen oder dem PDSCH-Kanal (Physical Downlink Shared Channel) mehrere Spreizungscodes verwendet werden, als das N-fache der Kosten eines Codes betrachtet werden, wobei N die Anzahl der Codes ist.

11. System gemäß einem der Ansprüche 8 oder 9, bei dem die gutgeschriebenen oder belasteten Kosten für die Verarbeitungskapazität für gemeinsame Kanäle, wenn von einem physischen Kanal mehrere Spreizungscodes verwendet werden, als das N-fache der Kosten eines Codes betrachtet werden, wobei N die Anzahl der Codes ist.

12. Bagisstations-Controller für ein mobiles Funkkommunikationssystem, der Mittel (14) umfasst, um von einer Basisstation ihre Gesamt Verarbeitungskapazität, oder capacity Credit, und das Verbrauchsgesetz oder den Umfang dieser Gesamt - Verarbeitungskapazität, oder die Kosten, für verschiedene Werte des Spreizungsfaktors zu empfangen, sowie Mittel (15), um die Verarbeitungskapazität auf der Basis des Verbrauchsgesetzes zu aktualisieren, **dadurch gekennzeichnet, dass** er Folgendes umfasst;
- Mittel, um die genannte Aktualisierung im Fall einer Mehrfachcode-Übertragung mit N Spreizungscodes auf der Basis der Kosten für mindestens einen der N Spreisungsfaktoren durchzuführen.

13. Basisstations-Controller gemäß Anspruch 12, bei dem es sich bei den im Verbrauchsgesetz gegebenen Kosten um die Kosten pro Spreizungsfaktor handelt.

14. Basisstations-Controller gemäß einem der Ansprüche 12 oder 13, bei dem die gutgeschriebenen oder belasteten Kosten für die Verarbeitungskapazität für dedizierte Kanäle, wenn von den Funkverbindungen oder dem PDSCH-Kanal (Physical Downlink Shared Channel) mehrere Spreizungscodes verwendet werden, als das N-fache der Kosten eines Codes betrachtet werden, wobei N die Anzahl der Codes ist.

15. Basisstations-Controller gemäß einem der Ansprüche 12 oder 13, bei dem die gutgeschriebenen oder belasteten Kosten der Verarbeitungskapazität für gemeinsame Kanäle, wenn von einem physischen Kanal mehrere Spreizungscodes verwendet werden, als das N-fache der Kosten eines Codes betrachtet werden, wobei N die Anzahl der Codes ist.
